# EUROPÄISCHE PATENTSCHRIFT

(11) **EP 0 729 963 B1**
(45) Veröffentlichungstag und Bekanntmachung des Hinweises auf die Patenterteilung: **02.05.2001**
(21) Anmeldenummer: 96102515.2
(22) Anmeldetag: 20.02.1996
(51) Int. Cl.: C07F 7/18, C08K 5/54

(54) **Oxalsäureamidfunktionelle Silane und ihre Verwendung als Kunststoffadditive**
Oxamide-functional silanes and their use as additives for polymers
Silanes à fonction oxamide et leur utilisation comme additifs pour des résines synthétiques

(30) Priorität: 03.03.1995 DE 19507414; 04.04.1995 DE 19512473
(43) Veröffentlichungstag der Anmeldung: 04.09.1996
(73) Patentinhaber: BAYER AG, 51368 Leverkusen (DE)
(72) Erfinder: Köhler, Burkhard, Dr., D-51373 leverkusen (DE); Horn, Klaus, Dr., D-41539 Dormagen (DE); Meier, Helmut-Martin, Dr., D-40883 Ratingen (DE)

(56) Entgegenhaltungen:
- EP-A- 0 188 767
- EP-A- 0 555 893
- DE-A- 4 224 769
- US-A- 4 306 073

## Beschreibung

Silane mit verschiedenen Funktionalitäten sind bekannt und z.B. in der Schriftenreihe "Pigmente Degussa-Silane" Nr. 75 von der Degussa beschrieben.

Für einige Anwendungen sind die bekannten Silane, z.B. aminofunktionelle Silane, nicht geeignet, da sie durch den Aminstickstoff zu basisch und zu nucleophil sind.

Es bestand daher die Aufgabe, stickstoffhaltige Silane mit verringerter Nucleophilie herzustellen.

EP-A 0555893 offenbart oxalsäureamidfunktionelle Silane als Metalldeaktivatoren in Polyolefinen, ABS und Kautschuken.

Die US 4 578 409 beschreibt halogenhaltige Phthalimide von Aminosilanen. Sie sind als Flammschutzadditive geeignet. Jedoch enthalten sie Brom oder Chlor, was für einige Anwendungen unerwünscht ist. Sie beeinflussen die Kerbschlagzähigkeit von Polycarbonaten nicht.

Die erfindungsgemäßen Amide der Oxalsäure mit Aminosilanen verbessern die Flammfestigkeit von Polycarbonaten und die Zähigkeit glasfaserverstärkter Polycarbonate.

Die oxalsäureamidfunktionellen Silane der Formel (I),

(RO)₃Si-CH₂-CH₂-CH₂-NH-CO-CO-NH-CH₂-CH₂-CH₂-Si(OR)₃ (I)

worin
- R: für C₁-C₂₂-Alkyl, C₆-C₁₂-Aryl, C₇-C₁₂-Aralkyl, oder für Reste der Formel (II) steht,

R¹-O-CHR²-CHR³- (II)
worin
- R¹: für einen Ethyl- oder Methylrest und
- R² und R³: unabhängig voneinander für Wasserstoff oder Methyl stehen,
wobei
- R: vorzugsweise Methyl oder Ethyl ist,
lassen sich als Additive für Kunststoffe, sowohl für Thermoplasten als auch für Duroplasten verwenden. Bevorzugte Thermoplasten sind thermoplastische, aromatische Polycarbonate oder thermoplastische Polyamide; bevorzugte Duroplasten sind Epoxyharze oder ungesättigte Polyesterharze (UP-Harze).

Die erfindungsgemäße Silane (I) sind insbesondere als Additive für glasfaserverstärkte Kunststoffe, also für glasfaserverstärkte Thermoplasten und für glasfaserverstärkte Duroplasten geeignet.

Gegenstand der vorliegenden Erfindung ist somit auch die Verwendung der erfindungsgemäßen Silane (I) als Additive für Kunststoffe.

Der Zusatz der erfindungsgemäßen Silane (I) verbessert die mechanischen Eigenschaften und die Flammwidrigkeit der Kunststoffe, insbesondere der Thermoplasten und ganz besonders der thermoplasten Polycarbonate.

Thermoplastische aromatische Polycarbonate im Sinne der vorliegenden Erfindung sind sowohl Homopolycarbonate als auch Copolycarbonate; die Polycarbonate können in bekannter Weise linear oder verzweigt sein.

Die Herstellung dieser erfindungsgemäß zu verbessernden Ausgangspolycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nonvertue', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der erfindungsgemäß zu verbessernden Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-PS 028 635, 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate ist nur ein Diphenol eingesetzt, im Falle der Copolycarbonate sind mehrere Diphenole eingesetzt.

Geeignete Kohlensäurederivate sind beispielsweise Phosgen oder Diphenylcarbonat.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Brom-phenol und 2,4,6-Tribromphenol.

Geeignete Monocarbonsäuren sind Benzoesäure, Alkylbenzoesäuren und Halogenbenzoesäuren.

Bevorzugte Kettenabbrecher sind die Phenole der Formel (V) 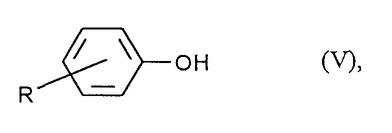 worin
- R: ein verzweigter oder unverzweigter C₈- und/oder C₉-Alkylrest ist.

Die Menge an einzusetzendem Kettenabbrecher beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxy-phenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden. Im Falle des Umesterungsverfahrens werden die Verzweiger zusammen mit den Diphenolen eingesetzt.

Alle diese Maßnahmen zur Herstellung der Ausgangspolycarbonate sind dem Fachmann geläufig.

Thermoplastische Polyamide im Sinne der vorliegenden Erfindung sind Polyamid 6, 66, 106, 11 und 12.

Epoxyharze im Sinne der vorliegenden Erfindung sind Mischungen von Diglycidylethern von Bisphenolen oder Polyglycidylether von Polyphenolen mit Säureanhydriden oder Aminen.

Ungesättigte Polyesterharze (UP-Harze) im Sinne der vorliegenden Erfindung sind Gemische aus Polyestern der Maleinsäure oder Fumarsäure und Diolen mit Styrol.

Die erfindungsgemäßen Silane (I) werden in Mengen von 0,05 Gew.-% bis 2 Gew.-%, vorzugsweise von 0,2 Gew.-% bis 1,5 Gew.-% den Kunststoffen zugesetzt.

Gegenstand der vorliegenden Erfindung sind somit auch Mischungen, enthaltend
A) 98 Gew.-% bis 99,95 Gew.-%, vorzugsweise 99,8 Gew.-% bis 98,5 Gew.-% an thermoplastischen, aromatischen Polycarbonaten und
B) 0,05 Gew.-% bis 2 Gew.-%, vorzugsweise 0,2 Gew.-% bis 1,5 Gew.-% an Silanen der Formel (I), bezogen jeweils auf 100 Gew.-% aus A) + B).

Die Einarbeitung der Silane (I) in die Kunststoffe ist je nach Art der Kunststoffe etwas verschieden.

Die Einarbeitung der Silane (I) in thermoplastische Kunststoffe, insbesondere in die thermoplastischen Polycarbonate oder in die thermoplastischen Polyamide erfolgt beispielsweise durch Mischen der Silane (I) mit dem Thermoplastengranulat und anschließende Verarbeitung der Mischung oder durch Zudosierung eines Konzentrats der Silane (I) in den Thermoplasten zu den entsprechenden Thermoplasten.

Gegenstand der vorliegenden Erfindung ist somit auch ein Verfahren zur Herstellung der erfindungsgemäßen Mischungen, das dadurch gekennzeichnet ist, daß nun die Silane (I) in Mengen von 0,05 Gew.-% bis 2 Gew.-%, vorzugsweise von 0,2 Gew.-% bis 1,5 Gew.-%, bezogen jeweils auf 100 Gew.-% Gesamtgewicht aus thermoplastischem, aromatischem Polycarbonat und Silan (I), entweder als solche oder in Form eines Konzentrats des Silans (I) in dem entsprechenden thermoplastischen aromatischen Polycarbonat dem thermoplastischen aromatischen Polycarbonat in der Schmelze bei Temperaturen von 220°C bis 340°C, vorzugsweie von 250°C bis 300°C in Knetern oder Extrudern zumischt und die Mischung in bekannter Weise zu Granulat oder anderen Formkörpern verarbeitet.

Geeignete Glasfasern im Sinne der vorliegenden Erfindung sind alle im Handel erhältlichen Glasfasersorten und -typen, also geschnittene Glassorten (Langglasfasern) (chopped strands) mit Längen von 3 bis 6 mm und Kurzglas (milled fibres). Die zur Herstellung der Formmassen verwendeten Glasfasern sind vorzugsweise aus E-Glas hergestellt. Unter E-Glas versteht man nach DIN 1259 ein Aluminium-Bor-Silikat-Glas, mit einem Alkalioxidgehalt unter 1 Gew.-%. Üblicherweise werden Glasfasern mit Durchmessern von 8 bis 20 µm eingesetzt.

Die Glasfasern werden in Mengen von 5 Gew.-% bis 70 Gew.-%, vorzugsweise von 10 Gew.-% bis 40 Gew.-%, bezogen auf 100 Gew.-% aus Kunststoff und Silan (I), den zu verbessernden Kunststoffen in bekannter Weise zugesetzt.

Gegenstand der vorliegenden Erfindung sind somit außerdem Mischungen, enthaltend
A) 98 Gew.-% bis 99,95 Gew.-%, vorzugsweise 98,5 Gew.-% bis 99,8 Gew.-% an Kunststoffen,
B) 0,05 Gew.-% bis 2 Gew.-%, vorzugsweise 0,2 Gew.-% bis 1,5 Gew.-% an Silanen der Formel (I), bezogen jeweils auf 100 Gew.-% aus A) + B), und zusätzlich
C) Glasfasern in Mengen von 5 Gew.-% bis 70 Gew.-%, vorzugsweise von 10 Gew.-% bis 40 Gew.-%, bezogen jeweils auf 100 Gew.-% aus Kunststoff und Silan (I).

Gegenstand der vorliegenden Erfindung ist außerdem ein Verfahren zur Herstellung der erfindungsgemäßen Mischungen, enthaltend thermoplastische Kunststoffe, die Silane der Formel (I) und Glasfasern, das dadurch gekennzeichnet ist, daß man die Glasfasern in Mengen von 5 Gew.-% bis 70 Gew.-%, vorzugsweise von 10 Gew.-% bis 40 Gew.-%, bezogen jeweils auf 100 Gew.-% aus Kunststoff und Silan (I), zusammen mit den Silanen (I) oder nach ihnen, den Thermoplasten in der Schmelze bei Temperaturen von 220°C bis 340°C, vorzugsweise von 250°C bis 300°C in Knetern oder Extrudern zumischt und die Mischung in bekannter Weise zu Granulat oder anderen Formkörpern verarbeitet.

Gegenstand der vorliegenden Erfindung ist außerdem ein Verfahren zur Herstellung der erfindungsgemäßen Mischungen, enthaltend duroplastische Kunststoffe, die Silane der Formel (I) und Glasfasern, das dadurch gekennzeichnet ist, daß man die Glasfasern in Mengen von 5 Gew.-% bis 70 Gew.-%, vorzugsweise von 10 Gew.-% bis 40 Gew.-%, bezogen jeweils auf 100 Gew.-% aus Kunststoff und Silan (I), zusammen mit den Silanen bei Temperaturen von 20 bis 100°C den ungehärteten Kunststoffen zumischt und anschließend aushärtet.

Die erfindungsgemäßen Kunststoffe, enthaltend die Silane (I) können gegebenenfalls noch andere, bekannte und für die einzelnen Kunststoffe jeweils geeignete Zusatzstoffe, Stabilisatoren, Entformungsmittel, Füllstoffe, Pigmente etc. enthalten.

Für die thermoplastischen Polycarbonate seien insbesondere Sulfonsäuresalze als zusätzliche Flammschutzmittel genannt.

Geeignete Sulfonsäuresalze sind Alkalisalze, Erdalkalisalze und Ammoniumsalze, vorzugsweise die Li-, Na- und K-Salze von aromatischen oder aliphatischen Sulfonsäure, vorzugsweis von Perfluorbutansulfonsäure, Perfluoroctansulfonsäure, Trichlormethylbenzolsulfonsäure, Diphenylsulfonsulfonsäure oder Formylbenzolsulfonsäure und deren Ketalen oder Acetalen.

Diese Sulfonsäuresalze werden den Polycarbonaten in den bekannten Mengen bis zu 0,5 Gew.-%, bezogen auf 100 Gew.-% Polycarbonat, vorzugsweise von 0,001 Gew.-% bis 0,5 Gew.-% und insbesondere von 0,01 Gew.-% bis 0,2 Gew.-%, bezogen wieder auf 100 Gew.-% Polycarbonat zugesetzt.

Die Einarbeitung der Sulfonsäuresalze in die thermoplastischen Polycarbonate ist bekannt, sie kann im vorliegenden Fall beispielsweise vor der Einarbeitung der Silane (I) oder zusammen mit ihnen erfolgen.

Gegenstand der vorliegenden Erfindung sind somit auch Mischungen, enthaltend
A) 98 Gew.-% bis 99,95 Gew.-%, vorzugsweise 98,5 Gew.-% bis 99,8 Gew.-% an thermoplastischen Polycarbonaten
B) 0,05 Gew.-% bis 2 Gew.-%, vorzugsweise 0,2 Gew.-% bis 1,5 Gew.-% an Silanen der Formel (I), bezogen jeweils auf 100 Gew.-% aus A) + B), und zusätzlich
D) bis 0,5 Gew.-%, vorzugsweise von 0,001 Gew.-% bis 0,5 Gew.-% und insbesondere von 0,01 bis 0,2 Gew.-%, bezogen jeweils auf 100 Gew.-% thermoplastisches Polycarbonat, an Sulfonsäuresalzen.

Gegenstand der vorliegenden Erfindung sind außerdem Mischungen, enthaltend
A) 98 Gew.-% bis 99,95 Gew.-%, vorzugsweise 98,5 Gew.-% bis 99,8 Gew.-% an thermoplastischen Polycarbonaten
B) 0,05 Gew.-% bis 2 Gew.-%, vorzugsweise 0,2 Gew.-% bis 1,5 Gew.-% an Silanen der Formel (I), bezogen jeweils auf 100 Gew.-% aus A) + B), zusätzlich
C) Glasfasern in Mengen von 5 Gew.-% bis 70 Gew.-%, vorzugsweise 10 Gew.-% bis 40 Gew.-%, bezogen jeweils auf 100 Gew.-% aus Polycarbonat und Silan (I) und zusätzlich
D) bis zu 0,5 Gew.-%, vorzugsweise von 0,001 bis 0,5 Gew.-% und insbesondere von 0,01 bis 0,2 Gew.-%, bezogen jeweils auf 100 Gew.-% thermoplastisches Polycarbonat an Sulfonsäuresalzen.

Zur Herstellung der erfindungsgemäßen Abmischungen können sowohl mit frisch hergestellten Polycarbonatharzen als auch mit gealtertem Polycarbonat aus geschredderten Polycarbonatformteilen hergestellt werden, wobei die Glasfasern und/oder die Sulfonsäuresalze bereits in den geschredderten Polycarbonatformteilen eingearbeitet sein können.

Die erfindungsgemäßen Silane (I) eignen sich somit auch zur Wiederaufarbeitung von Polycarbonataltmaterial und helfen somit bei der Wiederverwendung des Polycarbonatabfalls.

Gegenstand der vorliegenden Erfindung ist somit auch die Verwendung der Silane der Formel (I) zur Wiederaufarbeitung von Polycarbonatabfällen.

Die Veredelung von Polycarbonatabfällen durch Siloxane ist zwar aus DE-OS 4 224 769 (Le A 29 123) bekannt. Ein Rückschluß auf die Verwendung der neuen Silane der Formel (I) gemäß vorliegender Erfindung ist aber unseres Erachtens nicht ableitbar.

Die erfindungsgemäßen Polycarbonatformmassen können auf üblichen Verarbeitungsmaschinen nach bekannten Methoden zu beliebigen Formkörpern, auch zu Folien, verarbeitet werden.

Die erfindungsgemäßen flammwidrigen Polycarbonatformmassen eignen sich zur Herstellung von Spritzguß- oder Extrusionsartikeln, an die erhöhte Anforderungen bezüglich Flammwidrigkeit gestellt werden, z.B. im Elektro-, Bau-, Fahrzeug- oder Flugzeugbereich.

### Beispiele

Herstellung der Silane (I)

### Beispiel 1

Man mischt 275 g Aminopropyltriethoxysilan mit 92 g Oxalsäurediethylester, wobei sich die Mischung auf ca. 80°C erwärmt. Dann wird das Ethanol bei 120°C Badtemperatur bei Normaldruck abdestilliert.

### Beispiel 2

Man mischt 358 g Aminopropyltrimethoxysilan mit 118 g Oxalsäuredimethylester, wobei sich die Mischung auf ca. 70°C erwärmt. Dann wird das Methanol bei 110°C Badtemperatur bei Normaldruck abdestilliert.

### Verwendung der Silane (I).

### Beispiel 3

Ein Bisphenol-A-Polycarbonat mit einer Viskosität von Eta Rel = 1,305 wurden in einem Doppelwellenextruder bei Temperaturen von 300 bis 320°C aufgeschmolzen. Dann dosierte man eine Mischung aus 10 Gew.-% chopped strands, 0,5 Gew.-% Entformungsmittel, 0,15 Gew.-% Kaliumperfluorbutansulfonat und 0,25 Gew.-% Additiv gemäß Beispiel 1 direkt in die Polycarbonatschmelze.

Der Polymerstrang wurde gekühlt und granuliert.

Das Granulat wurde getrocknet (Vakuumtrockenschrank) und anschließend auf einer Spritzgußmaschine bei einer Massetemperatur von 280°C zu Prüfkörpern mit den Abmessungen 127 x 12,7 x 1,6 mm verspritzt.

Die Prüfstäbe wurden dann einer Brennbarkeitsprüfung gemäß der Vorschrift UL 94 (Brennbarkeit fester Kunststoffproben, Underwriters Laboratories) unterworfen und der Brennbarkeitsklasse V0 zugeordnet.

### Beispiel 4

Ein Bisphenol-A-Polycarbonat mit einer Viskosität von Eta Rel = 1,305 wurden in einem Doppelwellenextruder bei Temperaturen von 300 bis 320°C aufgeschmolzen. Dann dosierte man eine Mischung aus 10 Gew.-% chopped strands, 0,5 Gew.-% Entformungsmittel, 0,15 Gew.-% Kaliumperfluorbutansulfonat und 0,50 Gew.-% Additiv gemäß Beispiel 1 direkt in die Polycarbonatschmelze.

Der Polymerstrang wurde gekühlt und granuliert.

Das Granulat wurde getrocknet (Vakuumtrockenschrank) und anschließend auf einer Spritzgußmaschine bei einer Massetemperatur von 280°C zu Prüfkörpern mit den Abmessungen 127 x 12,7 x 1,6 mm verspritzt.

Die Prüfstäbe wurden dann einer Brennbarkeitsprüfung gemäß der Vorschrift UL 94 (Brennbarkeit fester Kunststoffproben, Underwriters Laboratories) unterworfen und der Brennbarkeitsklasse V0 zugeordnet.

### Beispiel 5

5 kg Formkörper, bestehend aus 10 Gew.-% glasfaserverstärktem Polycarbonat (nicht enthaltend Flammschutzsalze und/oder halogenhaltige Phthalimide) wurde geschreddert und anschließend wurden der Schredderware 0,15 Gew.-% Kaliumperfluorbutansulfonat und 0,5 Gew.-% Additiv gemäß Beispiel 1 zugesetzt.

Die Mischung wurde anschließend auf einer Spritzgußmaschine bei einer Massetemperatur von 280°C zu Prüfkörpern mit den Abmessungen 127 x 12,7 x 1,6 mm verspritzt.

Die Prüfstäbe wurden dann einer Brennbarkeitsprüfung gemäß der Vorschrift UL 94 (Brennbarkeit fester Kunststoffproben, Underwriters Laboratories) unterworfen. Dem Material wurde die Brennbarkeitsklasse V0 zugeordnet.

### Vergleichsbeispiel 1

Es wurde verfahren wie bei Beispiel 3, jedoch ohne Zusatz von 0,25 Gew.-% Additiv gemäß Beispiel 1. Dem Material wurde die Brennbarkeitsklassen V2 zugeordnet.

### Vergleichsbeispiel 2

Es wurde verfahren wie bei Beispiel 3, jedoch ohne Zusatz von 0,15 Gew.-% Kaliumperfluorbutansulfonat und 0,25 Gew.-% Additiv gemäß Beispiel 1. Dem Material wurde die Brennbarkeitsklassen V2 zugeordnet.

### Vergleichsbeispiel 3

Es wurde verfahren wie bei Beispiel 4, jedoch ohne Zusatz von 0,50 Gew.-% Additiv gemäß Beispiel 1. Dem Material wurde die Brennbarkeitsklassen V2 zugeordnet.

### Vergleichsbeispiel 4

Es wurde verfahren wie bei Beispiel 4, jedoch ohne Zusatz von 0,15 Gew.-% Kaliumperfluorbutansulfonat und 0,50 Gew.-% Additiv gemäß Beispiel 1. Dem Material wurde die Brennbarkeitsklassen V2 zugeordnet.

### Beispiel 6

5 kg Formkörper, bestehend aus 10 Gew.-% glasfaserverstärktem Polycarbonat mit 0,15 Gew.-% Kaliumperfluorbutansulfonat flammfest ausgerüstet (nicht enthaltend halogenhaltige Phthalimide) wurden geschreddert und anschließend wurden der Schredderware 0,5 Gew.-% Additiv gemäß Beispiel 1 zugesetzt.

Die Mischung wurde anschließend auf einer Spritzgußmaschine bei einer Massetemperatur von 280°C zu Prüfkörpern mit den Abmessungen 127 x 12,7 x 1,6 mm verspritzt.

Die Prüfstäbe wurden dann einer Brennbarkeitsprüfung gemäß der Vorschrift UL 94 (Brennbarkeit fester Kunststoffproben, Underwriter Laboratories) unterworfen. Dem Material wurde die Brennbarkeitsklasse V0 zugeordnet.

### Vergleichsbeispiel 5

Es wurde verfahren wie bei Beispiel 6, jedoch ohne Zusatz von 0,5 Gew.-% Additiv gemäß Beispiel 1. Dem Material wurde die Brennbarkeitsklassen V2 zugeordnet.

### Beispiel 7

5 kg Formkörper, bestehend aus dem Compound aus Beispiel 4 wurden geschreddert. 20 Gew.-% dieser Schredderware wurden dem Compound aus Beispiel 6 untergemischt. Die Mischung wurde anschließend auf einer Spritzgußmaschine bei einer Massetemperatur von 280°C zu Prüfkörpern mit den Abmessungen 127 x 12,7 x 1,6 mm verspritzt.

Die Prüfstäbe wurden dann einer Brennbarkeitsprüfung gemäß der Vorschrift UL 94 (Brennbarkeit fester Kunststoffproben, Underwriters Laboratories) unterworfen. Dem Material wurde die Brennbarkeitsklasse V0 bei 1,6 mm Dicke zugeordnet.

### Beispiel 8

Ein Bisphenol-A-Polycarbonat mit einer Viskosität von Eta Rel = 1,305 wurden in einem Doppelwellenextruder bei Temperaturen von 300 bis 320°C aufgeschmolzen. Dann dosierte man eine Mischung aus 0,5 Gew.-% Entformungsmittel, 0,15 Gew.-% Kaliumperfluorbutansulfonat und 0,50 Gew.-% Additiv gemäß Beispiel 1 direkt in die Polycarbonatschmelze.

Der Polymerstrang wurde gekühlt und granuliert.

Das Granulat wurde getrocknet (Vakuumtrockenschrank) und anschließend auf einer Spritzgußmaschine bei einer Massetemperatur von 280°C zu Prüfkörpern mit den Abmessungen 127 x 12,7 x 1,6 mm verspritzt.

Die Prüfstäbe wurden dann einer Brennbarkeitsprüfung gemäß der Vorschrift UL 94 (Brennbarkeit fester Kunststoffproben, Underwriters Laboratories) unterworfen. Dem Material wurde die Brennbarkeitsklasse V0 zugeordnet.

### Vergleichsbeispiel 6

Es wurde verfahren wie in Beispiel 8. Es wurde aber kein Additiv gemäß Beispiel 1 zur Mischung hinzugegeben. Die Prüfstäbe wurden dann einer Brennbarkeitsprüfung gemäß der Vorschrift UL 94 (Brennbarkeit fester Kunststoffproben, Underwriters Laboratories) unterworfen. Dem Material wurde die Brennbarkeitsklasse V2 zugeordnet.

### Beispiel 9

Ein Bisiphenol-A-Polycarbonat mit einer Viskosität von Eta Rel = 1,305 wurden in einem Doppelwellenextruder bei Temperaturen von 300 bis 320°C aufgeschmolzen. Dann dosierte man eine Mischung aus 30 Gew.-% milled fiber und 0,075 Gew.-% Additiv gemäß Beispiel 1 direkt in die Polycarbonatschmelze.

Der Polymerstrang wurde gekühlt und granuliert.

Das Granulat wurde getrocknet (Vakuumtrockenschrank) und anschließend auf einer Spritzgußmaschine bei einer Massetemperatur von 280°C zu Prüfkörpern mit den Abmessungen 50 x 6 x 4 mm verspritzt.

Die Prüfstäbe wurden dann einer Charpy-Schlagzähigkeitsprüfung gemäß der Vorschrift DIN 53453 unterworfen. Es wurde eine Schlagzähigkeit von 33 kJ/m^{^2} gemessen.

### Vergleichsbeispiel 7

Es wurde verfahren wie in Beispiel 9. Es wurde aber kein Additiv gemäß Beispiel 1 zur Mischung hinzugegeben. Die Prüfstäbe wurden dann einer Charpy-Schlagzähigkeitsprüfung gemäß der Vorschrift DIN 53453 unterworfen. Es wurde eine Schlagzähigkeit von 21 kJ/m² gemessen.

## Patentansprüche

1. Mischungen, enthaltend
A) 98 Gew.-% bis 99,95 Gew.-% an thermoplastischen, aromatischen Polycarbonaten und
B) 0,05 Gew.-% bis 2 Gew.-% an Silanen der Formel (I)
(RO)₃Si-CH₂-CH₂-CH₂-NH-CO-CO-NH-CH₂-CH₂-CH₂-Si(OR)₃ (I)
worin
R für C₁-C₂₂-Alkyl, C₆-C₁₂-Aryl, C₇-C₁₂-Aralkyl, oder für Reste der Formel (II) steht,
R¹-O-CHR²-CHR³- (II)
worin
R¹ für einen Ethyl- oder Methylrest und
R² und R³ unabhängig voneinander für Wasserstoff oder Methyl stehen,
bezogen jeweils auf 100 Gew.-% aus A) + B).

2. Verfahren zur Herstellung der Mischungen des Anspruchs 1, dadurch gekennzeichnet, daß man die Silane der Formel (I) in Mengen von 0,05 Gew.-% bis 2 Gew.-%, bezogen jeweils auf 100 Gew.-% Gesamtgewicht aus thermoplastischem, aromatischem Polycarbonat und Silan (I), entweder als solche oder in Form eines Konzentrats des Silans (I) in dem entsprechenden thermoplastischen aromatischen Polycarbonat dem thermoplastischen aromatischen Polycarbonat in der Schmelze bei Temperaturen von 220°C bis 340°C in Knetern oder Extrudern zumischt und die Mischung in bekannter Weise zu Granulat oder anderen Formkörpern verarbeitet.

3. Mischungen, enthaltend
A) 98 Gew.-% bis 99,95 Gew.-% an Kunststoffen und
B) 0,05 Gew.-% bis 2 Gew.-% an Silanen der Formel (I) des Anspruchs 1, bezogen jeweils auf 100 Gew.-% aus A) + B) und zusätzlich
C) Glasfasern in Mengen von 5 Gew.-% bis 70 Gew.-%, bezogen jeweils auf 100 Gew.-% aus Kunststoff und Silan (I).

4. Verfahren zur Herstellung der Mischungen des Anspruchs 3, enthaltend thermoplastische Kunststoffe, die Silane der Formel (I) und Glasfasern, dadurch gekennzeichnet, daß man die Glasfasern in Mengen von 5 Gew.-% bis 70 Gew.-%, bezogen jeweils auf 100 Gew.-% aus Kunststoff und Silan (I), zusammen mit den Silanen (I) oder nach ihnen, den Thermoplasten in der Schmelze bei Temperaturen von 220°C bis 340°C, in Knetern oder Extrudern zumischt und die Mischung in bekannter Weise zu Granulat oder anderen Formkörpern verarbeitet.

5. Verfahren zur Herstellung der Mischungen des Anspruchs 3, enthaltend duroplastische Kunststoffe, die Silane der Formel (I) und Glasfasern, dadurch gekennzeichnet, daß man die Glasfasern in Mengen von 5 Gew.-% bis 70 Gew.-%, bezogen jeweils auf 100 Gew.-% aus Kunststoff und Silan (I), zusammen mit den Silanen bei Temperaturen von 20°C bis 100°C mischt und anschließend härtet.

6. Mischungen enthaltend
A) 98 Gew.-% bis 99,95 Gew.-% an thermoplastischen Polycarbonaten und
B) 0,05 Gew.-% bis 2 Gew.-% zu Silanen der Formel (I), bezogen jeweils auf 100 Gew.-% aus A) + B) und zusätzlich
D) bis 0,5 Gew.-%, bezogen jeweils auf 100 Gew.-% thermoplastisches Polycarbonat an Sulfonsäuresalzen.

7. Mischungen enthaltend
A) 98 Gew.-% bis 99,95 Gew.-% an thermoplastischen Polycarbonaten und
B) 0,05 Gew.-% bis 2 Gew.-% zu Silanen der Formel (I), bezogen jeweils auf 100 Gew.-% aus A) + B), zusätzlich
C) Glasfasern in Mengen von 5 Gew.-% bis 70 Gew.-%, bezogen jeweils auf 100 Gew.-% aus Kunststoff und Silan (I) und zusätzlich
D) bis 0,5 Gew.-%, bezogen jeweils auf 100 Gew.-% thermoplastisches Polycarbonat, an Sulfonsäuresalzen.

8. Verwendung der Silane der Formel (I) des Anspruchs 1 zur Wiederaufarbeitung von Polycarbonatabfällen.

## Claims

1. Mixtures containing
A) 98 wt.% to 99.95 wt.% of thermoplastic aromatic polycarbonates and
B) 0.05 wt.% to 2 wt.% of silanes of formula (I) :
(RO)₃Si-CH₂-CH₂-CH₂-NH-CO-CO-NH-CH₂-CH₂-CH₂-Si(OR)₃ (I)
wherein
R is C₁-C₂₂-alkyl, C₆-C₁₂-aryl, C₇-C₁₂-aralkyl or radicals of formula (II):
R¹-O-CHR²-CHR³- (II)
wherein
R¹ is an ethyl or methyl radical and
R² and R³ independently of one another are hydrogen or methyl,
based in each case on 100 wt.% of A) + B).

2. Process for the preparation of the mixtures of Claim 1, characterized in that the silanes of formula (I), in amounts of 0.05 wt.% to 2 wt.%, based in each case on 100 wt.% of the total weight of thermoplastic aromatic polycarbonate and silane (I), are mixed, either as such or in the form of a concentrate of the silane (I) in said thermoplastic aromatic polycarbonate, with the thermoplastic aromatic polycarbonate in the melt at temperatures of 220°C to 340°C in kneaders or extruders and the mixture is processed in known manner to granules or other shaped objects.

3. Mixtures containing
A) 98 wt.% to 99.95 wt.% of plastics and
B) 0.05 wt.% to 2 wt.% of silanes of formula (I) of Claim 1, based in each case on 100 wt.% of A) + B), and additionally
C) glass fibres in amounts of 5 wt.% to 70 wt.%, based in each case on 100 wt.% of plastic and silane (I).

4. Process for the preparation of the mixtures of Claim 3, containing thermoplastics, the silanes of formula (I) and glass fibres, characterized in that the glass fibres, in amounts of 5 wt.% to 70 wt.%, based in each case on 100 wt.% of plastic and silane (I), are mixed, together with the silanes (I) or thereafter, with the thermoplastics in the melt at temperatures of 220°C to 340°C in kneaders or extruders and the mixture is processed in known manner to granules or other shaped objects.

5. Process for the preparation of the mixtures of Claim 3, containing thermosets, the silanes of formula (I) and glass fibres, characterized in that the glass fibres, in amounts of 5 wt.% to 70 wt.%, based in each case on 100 wt.% of plastic and silane (I), are mixed together with the silanes at temperatures of 20°C to 100°C and the mixture is then cured.

6. Mixtures containing
A) 98 wt.% to 99.95 wt.% of thermoplastic polycarbonates and
B) 0.05 wt.% to 2 wt.% of silanes of formula (I), based in each case on 100 wt.% of A) + B), and additionally
D) up to 0.5 wt.% of sulfonic acid salts, based in each case on 100 wt.% of thermoplastic polycarbonate.

7. Mixtures containing
A) 98 wt.% to 99.95 wt.% of thermoplastic polycarbonates and
B) 0.05 wt.% to 2 wt.% of silanes of formula (I), based in each case on 100 wt.% of A) + B), additionally
C) glass fibres in amounts of 5 wt.% to 70 wt.%, based in each case on 100 wt.% of plastic and silane (I), and additionally
D) up to 0.5 wt.% of sulfonic acid salts, based in each case on 100 wt.% of thermoplastic polycarbonate.

8. Use of the silanes of formula (I) of Claim 1 for the reprocessing of polycarbonate waste.

## Revendications

1. Mélanges contenant
A) 98 à 99,95 % en poids de polycarbonates aromatiques thermoplastiques et
B) 0,05 à 2 % en poids de silanes de formule (I)
(RO)₃Si-CH₂-CH₂-CH₂-NH-CO-CO-NH-CH₂-CH₂-CH₂-Si(OR)₃ (I)
dans laquelle
R représente un groupe alkyle en C₁-C₂₂, aryle en C₆-C₁₂, aralkyle en C₇-C₁₂ ou un groupe de formule (II)
R¹-O-CHR²-CHR³ (II)
dans laquelle
R¹ représente un groupe éthyle ou méthyle et
R² et R³ représentent chacun, indépendamment l'un de l'autre, l'hydrogène ou un groupe méthyle,
dans tous les cas pour 100 % en poids de A) + B).

2. Procédé de préparation des mélanges de la revendication 1, caractérisé en ce que l'on mélange au polycarbonate aromatique thermoplastique à l'état fondu à des températures de 220 à 340°C, dans des malaxeurs ou des extrudeuses, les silanes de formule (I) en quantité de 0,05 % en poids à 2 % en poids, dans chaque cas pour 100 % en poids du poids total du polycarbonate aromatique thermoplastique et du silane (I), tels quels ou à l'état de concentré du silane (I) dans le polycarbonate aromatique thermoplastique en question, après quoi on met le mélange à l'état de granulés ou d'autres objets moulés de manière connue.

3. Mélanges contenant
A) 98 à 99,95 % en poids de résines synthétiques et
B) 0,05 à 2 % en poids de silanes de formule (I) de la revendication 1, dans les deux cas pour 100 % en poids de A) + B), et en outre
C) des fibres de verre en quantité de 5 à 70 % en poids, pour 100 % en poids de la résine synthétique et du silane (I).

4. Procédé de préparation des mélanges de la revendication 3, contenant des résines synthétiques thermoplastiques, les silanes de formule (I) et des fibres de verre, caractérisé en ce que l'on mélange aux résines thermoplastiques à l'état fondu à des températures de 220 à 340°C dans des malaxeurs ou des extrudeuses les fibres de verre en quantité de 5 % en poids à 70 % en poids, pour 100 % en poids de la résine synthétique et du silane (I), soit avec les silanes (I), soit après eux, puis on met le mélange à l'état de granulés ou d'autres objets moulés de manière connue.

5. Procédé de préparation des mélanges de la revendication 3, contenant des résines synthétiques thermodurcissables, les silanes de formule (I) et des fibres de verre, caractérisé en ce que l'on mélange les fibres de verre en quantité de 5 % en poids à 70 % en poids, pour 100 % en poids de la résine synthétique et du silane (I), avec les silanes, à des températures de 20 à 100°C, puis on durcit.

6. Mélanges contenant
A) 98 à 99,95 % en poids de polycarbonates thermoplastiques, et
B) 0,05 à 2% en poids de silanes de formule (I), pour 100% en poids de A) + B), et en outre
D) jusqu'à 0,5 % en poids, pour 100 % en poids du polycarbonate thermoplastique, de sels d'acides sulfoniques.

7. Mélange contenant
A) 98 à 99,95 % en poids de polycarbonates thermoplastiques, et
B) 0,05 à 2 % en poids de silanes de formule (I), pour 100 % en poids de A) + B),
C) des fibres de verre en quantité de 5 à 70 % en poids, pour 100 % en poids de la résine synthétique et du silane (I), et en outre
D) jusqu'à 0,5 % en poids, pour 100 % en poids du polycarbonate thermoplastique, de sels d'acides sulfoniques.

8. Utilisation des silanes de formule (I) de la revendication 1 pour le recyclage de déchets de polycarbonates.
